(19) Europäisches Patentamt
European Patent Office
Office européen des brevets

(11) **EP 2 804 299 B1**

(12) **FASCICULE DE BREVET EUROPEEN**

(45) Date de publication et mention
de la délivrance du brevet:
**26.10.2022 Bulletin 2022/43**

(21) Numéro de dépôt: **14168344.1**

(22) Date de dépôt: **14.05.2014**

(51) Classification Internationale des Brevets (IPC):
**H02K 29/03** (2006.01)   **H02K 1/276** (2022.01)
**H02K 21/16** (2006.01)    H02K 3/28 (2006.01)

(52) Classification Coopérative des Brevets (CPC):
**H02K 29/03; H02K 1/2773; H02K 21/16;**
H02K 3/28; H02K 2213/03

(54) **Machine électrique tournante synchrone polyphasée**

Rotierende elektrischen Synchronmaschine mit mehreren Phasen

Rotating synchronous electric machine comprising a pluralité of phases

(84) Etats contractants désignés:
**AL AT BE BG CH CY CZ DE DK EE ES FI GB GR HR HU IE IS IT LI LT LU LV MC MK MT NL NO PL PT RO RS SE SI SK SM TR**

(30) Priorité: **16.05.2013 FR 1354404**

(43) Date de publication de la demande:
**19.11.2014 Bulletin 2014/47**

(73) Titulaire: **VALEO EQUIPEMENTS ELECTRIQUES MOTEUR**
**94046 Créteil (FR)**

(72) Inventeurs:
• **Legranger, Jérome**
**94000 Creteil (FR)**
• **Semail, Eric**
**59800 Lille (FR)**
• **Aslan, Bassel**
**75012 Paris (FR)**

(74) Mandataire: **Valeo Powertrain Systems**
**Service Propriété Intellectuelle**
**Immeuble le Delta**
**14, avenue des Béguines**
**95892 Cergy Pontoise (FR)**

(56) Documents cités:
**WO-A1-2006/029972    WO-A2-2010/146368**
**DE-A1- 10 009 462    GB-A- 2 289 991**
**US-A1- 2010 213 782    US-A1- 2011 101 906**

• **DHAWAN R ET AL: "Seven phase brush-less synchronous motor with reduced inverter size", 2004 IEEE APPLIED POWER ELECTRONICS CONFERENCE AND EXPOSITION, APEC 04, IEEE, ANAHEIM, CA, USA, vol. 2, 22 février 2004 (2004-02-22), pages 1099-1105, XP010703489, DOI: 10.1109/APEC.2004.1295959 ISBN: 978-0-7803-8269-5**

**Description**

La présente invention concerne une machine électrique tournante synchrone polyphasée dont le rotor comprend des aimants permanents par exemple des aimants surfaciques, enterrés, à concentration de flux, radiaux ou en forme de V et/ou dont le rotor comprend des bobines par exemple un rotor bobiné notamment à pôles saillants. Plus particulièrement l'invention concerne une machine électrique tournante de ce type pour des applications propres aux véhicules automobiles comme des alterno-démarreurs.

Selon une architecture connue, une machine électrique tournante comporte un stator muni de bobinages et un rotor comportant un nombre de paires de pôles. Les paires de pôles peuvent comprendre des aimants permanents logés dans des évidements aménagés dans la masse magnétique du rotor et disposés de manière à former une pluralité de pôles nord et de pôles sud alternés. Les paires de pôles peuvent comprendre des pôles dits saillants qui comprennent alors des bobines enroulées autour de bras radiaux du rotor. Dans ce cas, un pôle est formé par une bobine. Le nombre de paires de pôles aménagés de la sorte dans le rotor peut varier selon les applications de la machine tournante, de même que le nombre d'encoches formées dans le stator au sein desquelles sont disposés les bobinages.

Il est connu de la demande de brevet internationale publiée WO/2010/146368 A2 le 23 décembre 2010, une machine électrique à cinq phases qui comprend un premier élément et un second élément, dans laquelle: l'un du premier élément et du second élément est conçu pour pouvoir être utilisé comme rotor et l'autre du premier élément et du second élément est conçu pour pouvoir être utilisé comme stator; le premier élément comprend une pluralité de pôles; et le second élément comprend une pluralité de dents séparées par des encoches, et cinq enroulements destinés à générer chacun l'une des cinq phases, chaque enroulement comprenant n bobines connectées où n est un entier, et chaque bobine étant enroulée autour d'une seule dent.

Selon cette demande de brevet internationale, il est prévu une détermination de ratios entre le nombre de pôles du rotor et le nombre d'encoches du stator. Cela étant, cette détermination n'est pas optimale.

Pour qualifier une machine électromagnétique, il est connu de l'état de la technique l'utilisation d'un ratio dit SPP (Slots per Pole per Phase) selon un acronyme anglo-saxon bien connu de l'homme du métier signifiant Nombre d'encoches par nombre de pôles du rotor par nombre de phases de la machine.

Les documents GB2289991 A et WO/2006/029972 A décrivent des machines électriques similaires, qui comprennent un ratio SPP égale à 2/7 ou à 7/13 et qui comprennent les bobines espacées sur le pourtour du stator de façon régulière ou groupées, au moins en partie, en couple ou d'un ensemble de deux bobines.

L'invention a pour objet une machine électrique tournante synchrone polyphasée, comportant un rotor muni de pôles tournant à l'intérieur d'un stator comportant des encoches définissant des dents autour desquelles sont bobinées des bobines du stator.

Le ratio dit SPP obtenu par division du nombre d'encoches par le nombre de phases de la machine et le nombre de pôles du rotor est égal à 2/7.

Ainsi, le ratio est optimal pour que la machine présente un couple électromagnétique maximum dégagé qui est important, un couple de détente qui est relativement faible et des pertes par courant induit dans le rotor qui sont réduites au minimum.

De la sorte, la machine présente le meilleur compromis entre un couple électromagnétique maximum dégagé, un couple de détente réduit et des pertes volumiques par courants induits réduites dans le rotor.

Le nombre de pôles du rotor peut être formé par des aimants ou des bobines. Les pôles peuvent également être formés d'une part par des aimants permanents et d'autre part par des pôles saillants comme dans la demande de brevet FR 2887698.

Selon une caractéristique, le nombre de phases est supérieur ou égal à 3, par exemple 5 ou 7 phases.

Selon une caractéristique, la machine comprend cinq phases, et les bobines sont bobinées autour de chaque dent du stator en concentrique double couche.

Selon les caractéristiques inventives, les bobines de chaque phase ne sont pas angulairement distribuées de façon régulière sur le pourtour du stator, les bobines de chaque phase forment des groupes de deux bobines dit couples de bobine, deux bobines d'un couple sont séparées par deux dents du stator et les couples d'une phase sont espacés sur le pourtour du stator l'un par rapport à l'autre de 6 dents.

Cette caractéristique combiné avec le ratio SPP de 2/7 permet un bon compromis entre le facteur de bobinage et les effets parasites du bobinage concentriques à savoir, les pertes rotor (aimants), le bruit magnétique, l'équilibrage mécanique.

Selon une caractéristique, chacune des deux bobines de chaque couple est bobinée en tournant dans le même sens autour d'une dent du stator et pour chaque phase, en suivant le pourtour du stator, le sens de bobinage des bobines d'un couple est opposé au sens de bobinage des bobines du couple précédent. Selon une caractéristique, pour chaque couple les deux bobines sont montées en série l'une par rapport à l'autre.

Selon une caractéristique, le premier couple est monté en anti parallèle avec le deuxième couple.

Selon une caractéristique, les deux bobines du premier couple sont montées en série qui est monté en série tête-bêche par rapport au deuxième couple de bobines également monté en série.

Selon une caractéristique, le rotor est muni de quatorze pôles et le stator est muni de vingt encoches définissant vingt dents autour desquelles sont bobinées pour les cinq phases vingt bobines concentriques en dou-

Selon une caractéristique, les pôles sont formés par des aimants et le rotor comprend des évidements du rotor adaptés à recevoir lesdits aimants formant les pôles.

Le ratio est tel que la machine présente le meilleur compromis pour le fonctionnement de la machine entre un couple électromagnétique maximum dégagé, une quantité faible de pertes par courants induits dans le rotor et un couple de détente réduit.

Selon une caractéristique, les aimants forment des pôles sont disposés radialement et parallèlement à l'axe de rotation du rotor, en étant arrangés de façon à obtenir une structure de rotor de type à concentration de flux.

Selon une caractéristique, les aimants forment des pôles sont segmentés radialement en trois parties.

On peut également déduire un procédé de fabrication d'une machine électrique tournante synchrone polyphasée comportant un rotor et un stator munis respectivement de pôles et d'encoches adaptées à loger des bobines du stator.

Un tel procédé comporte une étape de détermination pour le nombre de phases de la machine, du nombre d'encoches et du nombre de pôles à prévoir pour la machine et présentant le meilleur compromis pour le fonctionnement de la machine par rapport à des critères.

Ladite étape de détermination comprend :

- une première étape de calcul en fonction du nombre de phases de la machine électrique tournante et pour chacun desdits critères, de valeurs correspondantes à un couple de nombres, ledit couple de nombres étant choisi parmi une pluralité de couples de nombres, chacun des couples de nombres de ladite pluralité comportant un nombre de pôles du rotor et un nombre d'encoches du stator;
- une deuxième étape de calcul comprenant pour ledit couple de nombres, une pondération des valeurs d'au moins un des critères de manière à obtenir pour ledit couple de nombres, un paramètre caractéristique apte à être comparé avec les paramètres caractéristiques d'autres couples de nombres choisis parmi ladite pluralité de couples de nombres.

Ainsi, on peut comparer du point de vue d'au moins un critère différents couples de nombre d'encoches et de nombre de pôles rotoriques, ce qui permet de choisir un couple permettant d'optimiser lesdits critères.

Comme il est connu de l'homme du métier un stator comprend des dents et des encoches. Il existe de nombreux de nombreux procédés de bobinage des dents et des encoches d'un stator. Parmi ceux-ci, il est connu un bobinage concentrique selon lequel le bobinage est concentré autour des dents prises une à une. Ce bobinage concentrique peut être simple couche ou double couche. Dans le cas d'un bobinage concentrique simple couche, il est prévu de ne faire passer dans une encoche que des fils d'une seule bobine, la bobine occupant deux encoches successives du stator. Ainsi, dans le cas d'un bobinage simple couche les bobines ne sont pas directement les unes à coté des autres, au contraire elles sont séparées par une dent autour de laquelle aucun fil n'est bobiné.

Dans le cas d'un bobinage concentrique double couche, il y a un bobinage d'une bobine autour de chaque dent du stator ce qui implique que dans chaque encoche on trouvera deux paquets de fils l'un à côté de l'autre, chaque paquet appartenant à une bobine. Cela implique un nombre de bobines égal au nombre d'encoches. Ainsi, après le choix d'un type de bobinage concentrique double couche ou simple couche, le choix du nombre d'encoches du stator correspond au choix du nombre de bobines du stator.

En d'autres termes, pour le stator, dans le cas d'un bobinage concentrique double couche, une bobine entoure une dent du stator donc le nombre de dents du stator est égal à celui du nombre de bobines. De ce fait, dans une encoche du stator formée entre deux dents consécutives du stator, il y a toujours deux bobines différentes dans le cas d'un bobinage concentrique double couche.

Un tel procédé comporte :

- une étape de réalisation d'un rotor destiné à recevoir le nombre de pôles déterminé, ladite étape de réalisation comprenant une étape d'usinage du rotor pour former des évidements destinés à recevoir des aimants et/ou pour former des bras radiaux destinés à recevoir des bobines;
- une étape d'usinage et/ou d'assemblage du stator pour y former le nombre déterminé d'encoches destinés à recevoir des bobines du stator ; et
- une étape de branchement des bobines du stator.

Plus particulièrement, l'étape de détermination consiste à choisir parmi une pluralité de couples de nombres, représentatifs d'un nombre de bobines et d'un nombre de pôles associé à la machine, le couple de nombres optimal en ce qu'il présente le meilleur compromis pour le fonctionnement de la machine par rapport à des critères déterminés. Ces critères peuvent être aussi bien des critères positifs représentatifs de l'efficacité de la machine et que l'on cherche à valoriser, ou bien des critères négatifs que l'on cherche à minimiser.

On peut réaliser des calculs pour une pluralité de couples de nombres potentiellement applicables à la machine et pour chaque critère distinctivement, puis chaque ratio de type SPP associé à un couple de nombres se voit attribuer un paramètre caractéristique par un module de calcul qui traite les valeurs obtenues par les calculs réalisés précédemment, en réalisant notamment une pondération des valeurs en fonction de l'importance que l'on accorde à l'un ou l'autre des critères. On réalise enfin la comparaison des facteurs caractéristiques des différents ratios pour choisir celui qui offre la plus grande efficacité à la machine.

En d'autres termes, le procédé comporte plus particulièrement une étape de détermination du nombre de bobines et du nombre d'aimants à prévoir pour la machine pour présenter le meilleur compromis de fonctionnement par rapport à des critères déterminés. On réalise à cet effet un traitement automatique de données qui sont obtenues par des calculs réalisés sur la machine pour chacun des critères distinctement. Un module de calcul réalise une pondération de ces résultats pour obtenir un paramètre caractéristique d'un ratio associé à un couple de nombres "encoches statoriques/pôles rotoriques" et il compare entre eux les paramètres caractéristiques d'autres ratios pour déterminer le meilleur ratio.

Ladite deuxième étape de calcul peut comprendre en outre le calcul d'un ratio obtenu par division du nombre d'encoches dudit couple de nombres par le nombre de phases de la machine et le nombre de pôles dudit couple de nombres, ledit paramètre caractéristique dudit couple de nombres étant associé audit ratio de sorte que ledit paramètre caractéristique soit apte à être comparé avec les paramètres caractéristiques des ratio d'autres couples de nombres choisis parmi ladite pluralité de couples de nombres.

Selon un mode de mise en œuvre, le rotor est muni d'aimants formant au moins une partie du nombre des pôles du rotor.

Selon un mode de mise en œuvre, lesdits critères comprennent la quantité de pertes volumiques par courants induits dans les aimants.

Selon un mode de mise en œuvre, lesdits critères comprennent le couple électromagnétique maximum dégagé par la machine.

Ainsi, on choisit comme critères un ou plusieurs critères parmi la liste des critères suivante comprenant la valeur du couple électromagnétique maximum développé par la machine, la réduction du couple de détente ou la réduction des pertes par courant induit dans le rotor. Avantageusement, il est possible selon l'invention de choisir le nombre d'encoches du stator et le nombre de pôles du rotor en fonction des performances de la machine sur ces critères, et en pondérant l'importance de ceux-ci.

L'étape de pondération peut comprendre une première multiplication de la valeur du couple électromagnétique maximum dégagé par la machine par un coefficient positif, une deuxième multiplication de la valeur de la quantité de pertes volumiques par courants induits par un premier coefficient négatif et une première addition du résultat de la première multiplication et la deuxième Lesdites critères peuvent comprendre

Selon un mode de mise en œuvre, lesdits critères comprennent la valeur de couple de détente.

L'étape de pondération peut comprendre en outre une troisième multiplication de la valeur pour le couple de détente par un deuxième coefficient négatif et une deuxième addition dudit résultat de la troisième multiplication audit résultat de la première addition.

En d'autres termes, le paramètre caractéristique de chaque ratio est obtenu par le module de calcul en additionnant la valeur du couple maximum dégagé multipliée par un premier coefficient positif, la valeur de la quantité de pertes par courant induit multipliée par un premier coefficient négatif, et la valeur du couple de détente multipliée par un deuxième coefficient négatif.

Ainsi, cela permet de valoriser les conceptions de machine qui sont, lorsque la machine fonctionne en mode alternateur, productrices d'énergie et de déprécier celles qui sont consommatrices.

On comprendra que ledit procédé permet de sélectionner facilement l'un ou l'autre de ces critères et de modifier l'importance que l'on donne à l'un de ces critères en jouant sur les pondérations.

On pourra également prévoir de rajouter des critères, comme par exemple la quantité de vibration mécanique des machines, en associant au calcul effectué la pondération souhaitée.

Selon différents modes de mise en œuvre dudit procédé, on pourra baser le calcul de paramètre caractéristique sur des valeurs brutes obtenues lors des étapes de calculs, ou bien sur des valeurs relatives calculées à partir de la valeur maximum obtenue pour chacun des critères lors des étapes de calcul.

D'autres caractéristiques et avantages de l'invention ressortiront à la lecture de la description qui suit en référence aux figures ci-dessous, dans lesquelles :

- les figures 1 à 3 illustrent des tableaux de résultats de différents calculs sur des machines électriques tournantes présentant des nombres différents de bobines du stator et de nombre de paires de pôles du rotor ;
- les figures 4 et 5 illustrent la base de données dans laquelle sont collectés et traitées automatiquement les résultats des calculs illustrés sur les figures 1 à 3, respectivement en considérant des valeurs absolues (figure 4) ou des valeurs relatives (figure 5);
- la figure 6 illustre la structure d'une machine électrique tournante selon l'invention ;
- les figures 7 et 8 représentent le schéma de bobinage de la machine selon l'invention ; et
- la figure 9 représente un procédé de réalisation d'une machine électrique.

Le procédé de fabrication comporte une étape d'usinage et/ou d'assemblage du rotor et du stator de la machine électrique, ainsi qu'une étape de branchement des bobines disposées dans les encoches du stator, et il comporte au préalable une première étape qui consiste à déterminer le nombre d'encoches et/ou de bobines du stator et le nombre de pôles du rotor d'une machine électrique tournante qui proposent le meilleur rendement de cette machine, en réalisant des calculs sur différentes machines modélisées et en associant un paramètre caractéristique à chacun des ratio lié à des couples de nombres "encoches/nombre de paires de pôles" qui ont été modélisés.

Ce paramètre caractéristique est obtenu par l'intermédiaire d'une équation permettant la prise en compte de plusieurs critères déterminés. Le but est de trouver le nombre d'encoches et le nombre de pôles à prévoir dans la machine pour que celle-ci offre le meilleur compromis de fonctionnement par rapport à ces critères. Tel que cela sera décrit ci-après, on étudie notamment le fonctionnement de la machine par rapport au couple par ampère maximum dégagé, par rapport au couple de détente, et par rapport aux pertes par courant induit.

En d'autres termes, le procédé permet notamment de déterminer le nombre de pôles optimal au rotor en fonction du nombre d'encoches de stator. Le rotor peut comporter des paires de pôles formées par des aimants. De manière égale, le rotor peut comporter des paires de pôles réalisés par des enroulements autour d'un bras radial du rotor selon le type de rotor pôle saillant bien connu de l'homme du métier. Enfin, le rotor peut d'une part comporter des paires de pôles réalisées d'une part par des aimants et d'autre part par des enroulements autour de bras radiaux du rotor. Un tel type de rotor est par exemple décrit dans la demande de brevet FR2887698.

On va par la suite détailler un cas pratique réalisé dans le cas d'une machine à cinq phases pour laquelle on cherche à déterminer quel est le nombre optimal d'encoches du stator et de pôles du rotor qui doivent équiper la machine.

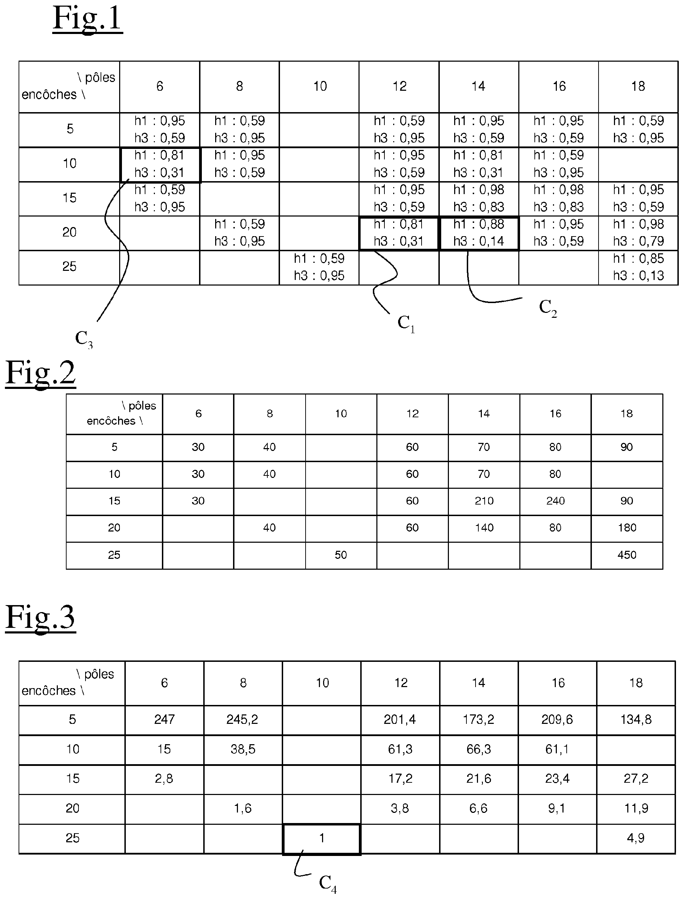

Dans la figure 1 on illustre les calculs relatifs à la production du couple par ampère de la machine tournante en fonction du nombre d'encoches de la machine renseigné dans la première colonne et du nombre de pôles du rotor de la machine renseigné dans la première ligne. On prend en compte l'équation donnant le couple électromagnétique fourni pour une machine à cinq phases, qui est la suivante:

$$C = \frac{5}{2} \cdot \left( p \cdot \phi_1(h_1) \cdot I_1 + 3 \cdot p \cdot \phi_3(h_3) \cdot I_3 \right) + \Delta C$$

avec

Φ1 et Φ3 les valeurs efficaces des flux de premier et de troisième harmonique

h1 et h3 les facteurs de bobinage de premier et troisième harmonique

I1 et I3 les valeurs efficaces des courants de premier et troisième harmonique et

p le nombre de paires de pôles

ΔC représentant un couple, produit par les autres harmoniques, et dont la valeur moyenne est inférieure à 10% de la valeur moyenne de

$$\frac{5}{2} \cdot \left( p \cdot \phi_1(h_1) \cdot I_1 + 3 \cdot p \cdot \phi_3(h_3) \cdot I_3 \right)$$

Ces calculs permettent de distinguer automatiquement, tel que cela est visible sur le tableau illustré figure 1, les facteurs de bobinage de premier et de troisième harmonique en fonction des couples de nombre d'encoches et de pôles qui étaient présents sur les machines modélisées. A titre d'exemple, lorsque la machine comporte vingt encoches de stator destinées à recevoir vingt bobines et douze pôles de rotor, on a enregistré un facteur fondamental de premier harmonique h1 égal à 0.81 et un facteur de troisième harmonique h3 égal à 0.31 (tel que cela est visible dans la case C1), alors que lorsque la machine comporte vingt encoches et quatorze pôles de rotor, on a enregistré un facteur fondamental h1 égal à 0.88 et un facteur de troisième harmonique h3 égal à 0.14 (tel que cela est visible dans la case C2).

On peut observer que dans ce test, les résultats peuvent être regroupés en utilisant le rapport SPP du nombre de bobines de stator par nombre de pôles et par phase, tel que l'équation suivante est vérifiée :

$$Np * 5 * SPP = Nc$$

avec Np et Nc correspondant respectivement au nombre de pôles et au nombre de bobines de stator, et 5 étant le nombre de phases de la machine.

A titre d'exemple, les machines comportant vingt bobines et douze pôles présentent dans ces calculs un facteur de bobinage de premier harmonique égal à 0.81 et un facteur de troisième harmonique égal à 0.31, et on constate qu'il en est de même pour les machines qui comportent dix bobines et six pôles (visible en case C3), ces deux configurations de machine présentant le même rapport SPP égal à 1/3. Il apparaît donc que pour un SPP de 1/3 le premier harmonique est 0,81 et le troisième harmonique 0,31. De la sorte, il n'est pas nécessaire de faire les calculs pour toutes les combinaisons d'encoches et de pôles. Au contraire, il suffit de faire un calcul pour chaque groupe de combinaison présentant le même SPP.

Pour sélectionner le couple encoches/pôles, on cherche à privilégier les facteurs de bobinage du premier harmonique correspondant au couple maximum dégagé et à minimiser les facteurs de bobinage du troisième harmoniques. En effet, il a été constaté qu'un flux de troisième harmonique trop important engendre des pertes volumiques par courants induits élevées.

Dans la pratique, les différentes valeurs des facteurs pour chacun des couples de valeurs "encoches/ pôles" sont rangées dans une base de données d'un module de calcul associé, et il sera expliqué plus après l'utilisation faite de cette base de données pour choisir de façon automatique la meilleure combinaison possible d'encoches du stator et de paires de pôles pour la machine listée par rapport aux critères déterminés.

Dans la figure 2, on illustre les résultats des calculs de la fréquence du couple de détente en fonction du nombre d'encoches de la machine renseigné dans la première colonne et du nombre de pôles du rotor de la machine renseigné dans la première ligne, étant entendu que l'on souhaite disposer d'une machine tournante qui minimise au mieux ce couple de détente. On considère à cet effet la fréquence de pulsation du flux par effet de denture, celle-ci pouvant être déterminée pour un tour mécanique en considérant le plus petit commun multiple entre le nombre de bobines et le nombre de paires de pôles.

L'amplitude de pulsation devenant plus faible lorsque la fréquence augmente, les couples de valeurs qui présentent un plus petit commun multiple élevé ont une amplitude de pulsation par effet de denture beaucoup plus faible. On comprendra que l'on recherche dans des machines tournantes des combinaisons dans lesquelles l'amplitude de pulsation de flux est la plus faible possible, car elle présente l'avantage lors de l'alimentation à vide de minimiser les effets du crantage, c'est à dire le passage successif de deux paires de pôles voisines devant une bobine de stator donnée, ce qui participe à la diminution de l'ondulation du couple. On peut par exemple observer sur le tableau illustré figure 2 que la machine comportant vingt bobines et quatorze pôles a un plus petit multiple commun élevé par rapport à la machine comportant vingt bobines et huit pôles, de sorte que cette machine à vingt bobines et quatorze pôles a une amplitude de pulsation du flux plus faible.

Dans la figure 3, on illustre dans le cas où les pôles sont formés par des aimants les calculs des pertes par courant induit en fonction du nombre d'encoches de la machine renseigné dans la première colonne et du nombre de pôles du rotor de la machine renseigné dans la première ligne, on utilise un modèle analytique des pertes volumiques dans les pôles rotoriques de manière à comparer ces pertes dans les différentes combinaisons "nombre d'encoches/nombre de pôles".

Pour avoir une comparaison juste entre les différentes combinaisons de couple nombre d'encoches/nombre de pôles", on considère que la même densité linéique de courant est injectée, quel que soit le nombre d'encoches de stator et d'aimants du rotor.

Ici, on renseigne le résultat calculé par des valeurs relatives par rapport à la machine testée la plus performante, c'est à dire celle pour laquelle les pertes volumiques sont les moins élevées, à qui on associe une valeur de référence unitaire. C'est ici la machine comportant vingt cinq encoches ou vingt cinq bobines dans le cas d'un bobinage double couche pour dix pôles, tel que cela est visible dans le tableau de la figure 3, dans la case C4. On représente alors les pertes volumiques dans les aimants pour chacune des combinaisons par rapport aux pertes calculées dans la machine pour le couple de valeurs 25-10.

En d'autres termes, les valeurs du tableau de la figure 3 permettent de déterminer la machine testée la plus performante du point de vue du critère des pertes volumiques par courant induit, c'est à dire celle pour laquelle les pertes volumiques sont les moins élevées dans le cas où les pôles du rotor sont formés par des aimants. Cela étant, ces résultats peuvent être généralisés à toutes machines que les pôles soient formés par des aimants ou des bobines, de sorte que la machine comportant 25 encoches et 10 pôles de la case C4 permet la minimisation des pertes par courant induit dans le rotor quel que soit le mode de formation des pôles par aimant ou bobines.

On pourra également tenir compte d'un quatrième critère, qui consiste en la valeur des vibrations mécaniques de la machine selon le nombre de bobines et de nombre de paires de pôles, formé chacun par exemple par au moins un aimant.

Ces valeurs, qui sont déterminées ici mathématiquement sont comme précédemment enregistrées dans la base de données du module de calcul.

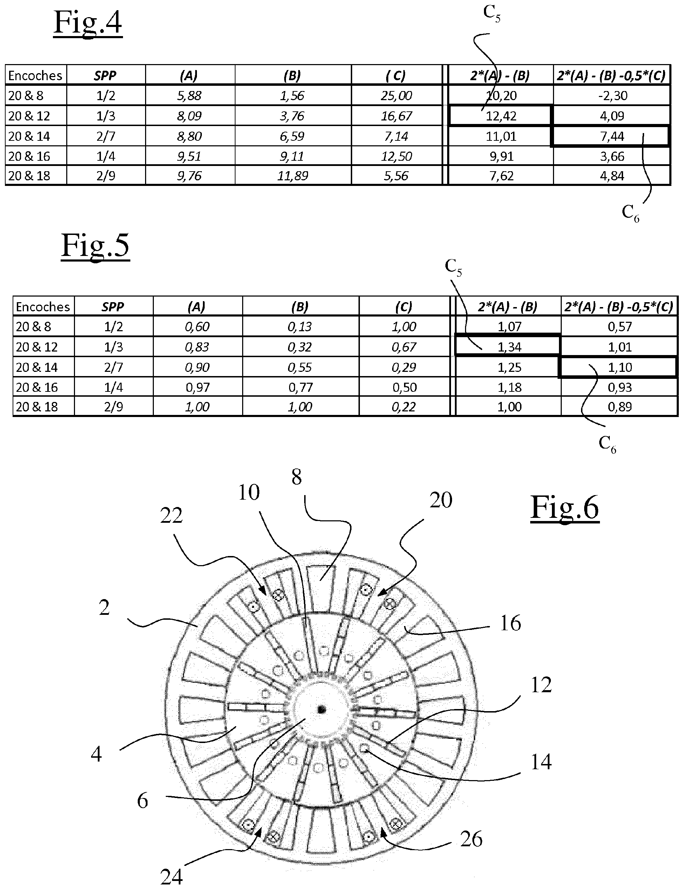

Toutes les données sont rassemblées dans la base de données du module de calcul illustrée sur les figures 4 et 5. Dans la première colonne (A), on a reporté les calculs effectués, pour chacun des couples de valeur, relatives au couple par ampère produit par la machine tournante. A titre de simplification dans l'explication du procédé, il n'a ici été reporté dans la première colonne (A) que le facteur de premier harmonique h1. Dans la deuxième colonne (B), on a reporté les calculs effectués relatifs aux pertes par courant induit tandis que dans la troisième colonne (C), on a reporté les calculs de 1000/(plus petit commun multiple) qui quantifie le couple de détente. On comprendra que si d'autres critères étaient choisis, les résultats des tests correspondants seraient reportés de manière analogue dans cette base de données.

Le module de calcul va déterminer automatiquement le meilleur couple de valeurs représentatives du nombre d'encoches de stator et du nombre de pôles. Pour cela, le module de calcul a été paramétré pour pondérer les valeurs rentrées dans la base de données. La valeur de la première colonne (A), qui correspond au calcul effectué pour le premier critère, à savoir la détermination du couple produit, est multipliée par un coefficient positif. A titre d'exemple ces valeurs sont ici multipliées par 2. On met ainsi de côté les résultats donnant un premier harmonique faible. On valorise de fait les couples de nombre d'encoches de stator et de nombre de paires de pôles correspondants à des résultats de facteurs de bobinage élevés pour le premier harmonique.

On comprendra que l'on pourra prévoir de rentrer le facteur de troisième harmonique dans une colonne complémentaire et associer également un coefficient de pondération. Toutefois, celui-ci sera ici négatif ou inférieur à 1, de manière à écarter ainsi les résultats donnant un troisième harmonique également élevé.

De façon identique les valeurs rentrées dans la deuxième colonne (B), qui correspondent au critère des pertes volumiques par courants induits, sont multipliées par un coefficient négatif, car il représente un phénomène contre productif. Ici les chiffres de la colonne sont multipliés par un facteur -1. Enfin les valeurs de la troisième colonne (C) représentatives du critère du couple de détente, sont multipliées par un facteur -0.5, puisque là aussi elles représentent un phénomène négatif que l'on cherche à minimiser.

Le module de calcul réalise alors l'opération programmée pour tenir compte, pour chaque couple de nombre d'encoches de stator et de paires de pôles, des critères déterminés et de leur pondération respective. Le résultat de cette équation donne le paramètre caractéristique du couple de nombres, qui est reporté dans le module de calcul, (elle est visible sur le tableau des figures 4 et 5, dans la quatrième colonne et dans la cinquième colonne), le module de calcul n'ayant plus qu'à mettre en avant le couple de nombres correspondant à la plus grande valeur caractéristique.

Tel qu'on peut le voir sur les figures 4 et 5, en fonction des valeurs de pondération choisies, il convient de privilégier la réalisation de la machine tournante avec vingt bobines de stator et douze pôles, si l'on décide de ne tenir compte que du couple moyen fondamental et des pertes volumiques par courants induits, sans tenir compte du critère de minimisation du couple de détente (tel que cela est visible dans les cases C5) alors qu'il convient de privilégier la réalisation de la machine tournante avec vingt bobines et quatorze pôles si l'on tient compte des trois critères (tel que cela est visible dans les cases C6).

Le procédé de fabrication de la machine comporte également une étape de réalisation du rotor et du stator de la machine pour que ceux-ci comprennent respectivement le nombre de pôles et d'encoches déterminés précédemment.

La description du procédé va maintenant être complétée par la description du produit obtenu directement par le procédé, en regard de la figure 6, qui illustre la structure d'une machine électrique tournante dont le nombre d'encoches et le nombre de pôles est optimisé pour répondre au mieux aux trois critères décrit précédemment. La machine est ainsi équipée de vingt encoches ou vingt bobines dans le cas double couche concentrique et de quatorze aimants selon un rapport SPP, tel qu'il a été défini précédemment, de 2/7.

La machine 1 est de type à aimants permanents qui comprend un stator 2 et un rotor 4. Le rotor comporte un alésage central 6 débouchant à ses deux extrémités axiales, destiné à recevoir un arbre d'entraînement du rotor.

Il découle de la détermination du nombre d'encoches et d'aimants une forme de réalisation spécifique de cette machine pour laquelle le stator comporte vingt encoches qui vont recevoir dans le cas double couche vingt bobines et le rotor comporte quatorze pôles. Selon l'exemple illustré sur la figure 6, les pôles sont réalisés à l'aide d'aimant.

Pour cela, quatorze évidements adaptés à recevoir chacun un aimant. Pour plus de visibilité sur la figure 6, on a représenté une encoche 8 vide de bobine et un évidement 10 vide d'aimant.

Alternativement (non illustré sur la figure 6) les quatorze aimants peuvent être surfaciques, les évidements sont alors moins profonds.

Le rotor comporte quatorze aimants permanents. Chaque aimant 12 présente une forme de pavé, de section sensiblement rectangulaire, et chaque aimant est disposé de manière radiale par rapport au centre du rotor de façon à obtenir une structure de rotor de type à concentration de flux. Par ailleurs, les aimants sont arrangés de manière à présenter sur la surface extérieure du rotor, une alternance radiale de pôles nord et de pôles du sud, de manière à former sept paires successives de pôles nord et sud alternés.

Tel que cela est visible sur la figure 6, les aimants peuvent avantageusement être segmentés radialement, par exemple en deux, trois ou quatre parties. Le cas illustré sur la figure correspond à une segmentation radiale en trois parties. On constate que cette segmentation radiale en trois parties permet une réduction de pertes fer rotoriques 80 %. Par ailleurs, afin de diminuer les pertes volumiques par courants induits dans les aimants, on adapte la longueur de chaque pôle d'aimant en fonction de cette segmentation radiale, de sorte que l'on segmente axialement les aimants.

Le rotor comporte en outre des évidements complémentaires à ceux référencés 10 adaptés à recevoir les aimants permanents et qui s'étendent parallèlement à l'alésage central. Ces seconds évidements sont adaptés à recevoir des tirants traversants 14, qui rigidifient et qui permettent la fixation de l'assemblage de la machine tournante, en s'étendant dans la direction de l'axe de rotation du rotor. Le stator comporte vingt encoches disposées radialement. Elles présentent une profondeur adaptée pour que les bobines qu'elles logent soient intégralement reçues dans le stator et ne gênent pas la rotation du rotor dans le stator. La répartition régulière des encoches forme une pluralité de dents 16 qui s'étendent chacune entre deux encoches voisines.

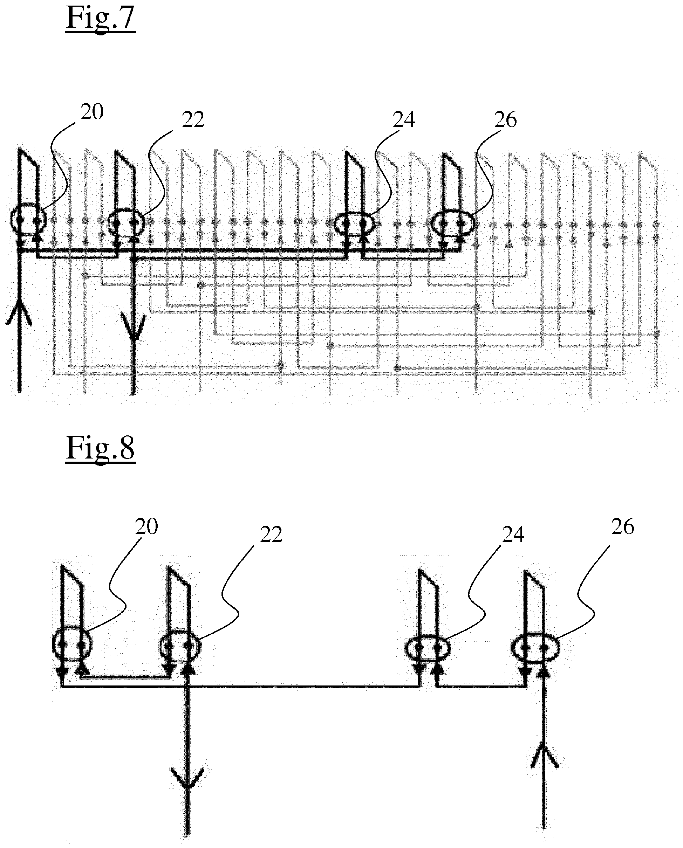

Tel qu'illustré sur la figure 6, chacune des bobines est enfilée autour d'une des dents selon un bobinage double couche concentrique et une encoche présente une largeur suffisante pour recevoir deux portions de deux bobines distinctes. Les 4 bobines 20, 22, 24, et 26 d'une des cinq phases sont représentées sur la figure 6. La croix et la pointe illustrent le sens de bobinage des bobines. Plus précisément, sur la première bobine 20 en haut à droite la croix illustre le départ du courant derrière une dent 16 et la pointe illustre le retour du courant vers le devant de la dent 16. Sur la deuxième bobine 22 en haut à gauche la croix illustre le départ du courant derrière une dent 16 et la pointe illustre le retour du courant vers le devant de la dent 16. Sur la troisième bobine 24 en bas à gauche la pointe illustre le retour du courant vers le devant d'une dent 16 et la croix illustre le départ du courant derrière la dent 16. Sur la quatrième bobine 26 en bas à droite la pointe illustre le retour du courant vers le devant d'une dent 16 et la croix illustre le départ du courant derrière la dent 16. Ces première, deuxième, troisième et quatrième bobines correspondent respectivement aux bobines 20, 22, 24 et 26 des figures 7 et 8 suivantes.

Sur les figures 7 et 8 sont illustrés respectivement deux schémas de connexion spécifiques des bobines 20, 22, 24 et 26 d'une des 5 phases.

Sur la figure 7, on a représenté les bornes des vingt bobines d'une machine à cinq phases. Chaque phase est constituée par quatre bobines, agencées de manière équivalente en une combinaison de bobines en série et de bobines en parallèle. Sur la figure 7, une partie des bornes, des connexions et des bobines est représenté en traits gras. Cela correspond aux bobines 20, 22, 24 et 26 d'une des 5 phases. Plus précisément, on peut constater que pour la partie visible en trait gras sur la figure 7, deux bobines 20 et 22 sont montées en série en formant un ensemble qui est monté en antiparallèle par rapport à un deuxième ensemble formé par le montage en série de deux bobines 24 et 26.

Ce montage antiparallèle présente l'avantage de diminuer le courant par bobine et de facto pouvoir bobiner avec du fil de diamètre plus faible ce qui est un avantage pour des machines avec de forts courants de bobines et des applications basse tension.

Sur la figure 8, on a une machine à cinq phases, et chaque phase est constituée par quatre bobines, agencées de manière équivalente en une combinaison de quatre bobines en série. Plus précisément, on peut constater que pour la phase illustrée sur la figure 8, deux bobines 20 et 22 sont montées en série en formant un ensemble qui est monté en série tête-bêche par rapport à un deuxième ensemble formé par le montage en série de deux bobines 24 et 26. Ce montage en série tête-bêche est particulièrement adapté pour des applications haute tension.

Dans ce produit obtenu directement par le procédé de fabrication, on prévoit des caractéristiques secondaires permettant d'améliorer le rendement de la machine.

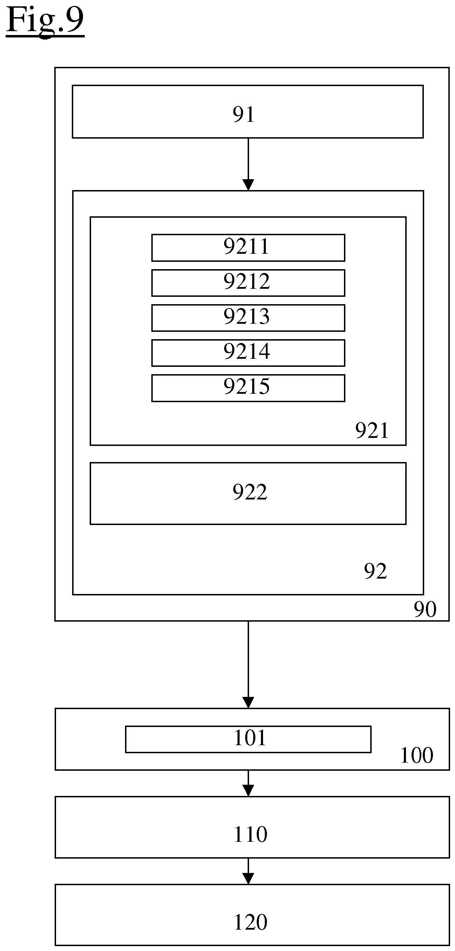

Sur la figure 9, on a représenté selon un mode de mise en oeuvre des différentes étapes d'un procédé de fabrication d'une machine électrique tournante.

Le procédé comprend une étape de détermination 90 pour le nombre de phases de la machine, du nombre d'encoches (8) et du nombre de pôles à prévoir pour la machine et présentant le meilleur compromis pour le fonctionnement de la machine par rapport à des critères.

L'étape de détermination 90 comprend :

- une première étape de calcul 91 en fonction du nombre de phases de la machine électrique tournante et pour chacun desdits critères, de valeurs correspondantes à un couple de nombres, ledit couple de nombres étant choisi parmi une pluralité de couples de nombres, chacun des couples de nombres de ladite pluralité comportant un nombre de pôles du rotor et un nombre d'encoches 16 du stator;

- une deuxième étape de calcul 92.

L'étape de calcul 92 comprend un couple de nombres, une pondération 921 des valeurs d'au moins un des critères de manière à obtenir pour ledit couple de nombres, un paramètre caractéristique apte à être comparé avec les paramètres caractéristiques d'autres couples de nombres choisis parmi ladite pluralité de couples de nombres.

L'étape de calcul 92 comprend pour ledit couple de nombres, un calcul 922 du ratio SPP obtenu par division du nombre d'encoches dudit couple de nombres par le nombre de phases de la machine et le nombre de pôles dudit couple de nombres.

L'étape de pondération 921 comprend :

- une première multiplication 9211 de la valeur du couple électromagnétique maximum dégagé par la machine par un coefficient positif ;
- une deuxième multiplication 9212 de la valeur de la quantité de pertes volumiques par courants induits par un premier coefficient négatif ;
- une première addition 9213 du résultat de la première multiplication et la deuxième multiplication ;
- une troisième multiplication 9214 de la valeur du couple de détente par un deuxième coefficient négatif; et
- une deuxième addition 9215 dudit résultat de la troisième multiplication audit résultat de la première addition.

Le procédé comprend en outre une étape de réalisation 100 d'un rotor destiné à recevoir le nombre de pôles déterminé,

L'étape de réalisation 100 comprend une étape d'usinage du rotor 4 pour former des évidements 10 destinés à recevoir des aimants et/ou pour former des bras radiaux destinés à recevoir des bobines;

Le procédé comprend enfin :

- une étape d'usinage et/ou d'assemblage 110 du stator 2 pour y former le nombre déterminé d'encoches 8 destinés à recevoir des bobines 20, 22, 24, 26 du stator ; et
- une étape de branchement 120 des bobines du stator.

## Revendications

1. Machine électrique tournante synchrone polyphasée, comportant un rotor (4) muni de pôles (12) tournant à l'intérieur d'un stator comportant des encoches (8) définissant des dents autour desquelles sont bobinées des bobines du stator (20, 22, 24, 26), le ratio (SPP) obtenu par division du nombre d'encoches (8) par le nombre de phases de la machine et le nombre de pôles du rotor est égal à 2/7, **caractérisée**

**en ce que** les bobines de chaque phase ne sont pas angulairement distribuées de façon régulière sur le pourtour du stator, **en ce que** les bobines (20, 22, 24, 26) de chaque phase forment des groupes de deux bobines dit couples de bobine, **en ce que** les deux bobines d'un couple (20,22 ou 24,26) sont séparées par deux dents du stator, les couples (20+22, 24+26) d'une phase sont espacés sur le pourtour du stator l'un par rapport à l'autre de 6 dents.

2. Machine électrique selon la revendication 1, **caractérisée en ce que** le nombre de phases est supérieur ou égal à 3, par exemple 5 ou 7 phases.

3. Machine électrique selon l'une des revendications précédentes, **caractérisée en ce que** la machine comprend cinq phases, et les bobines sont bobinées autour de chaque dent du stator en concentrique double couche.

4. Machine électrique selon l'une quelconque des revendications précédentes, **caractérisée en ce que** chacune des deux bobines de chaque couple est bobinée en tournant dans le même sens autour d'une dent du stator et **en ce que**, pour chaque phase, en suivant le pourtour du stator, le sens de bobinage des bobines d'un couple est opposé au sens de bobinage des bobines du couple précédent.

5. Machine électrique selon l'une quelconque des revendications précédentes, **caractérisée en ce que** pour chaque couple les deux bobines sont montées en série l'une par rapport à l'autre.

6. Machine électrique selon l'une quelconque des revendications précédentes, **caractérisée en ce que** le premier couple de bobines (20, 22) est monté en anti parallèle avec le deuxième couple (24, 26).

7. Machine électrique selon l'une quelconque des revendications 1 à 5, **caractérisée en ce que** les deux bobines du premier couple (20, 22 ou 24, 26) sont montées en série qui est monté en série tête-bêche par rapport au deuxième couple (24,26 ou 20,22) également monté en série.

8. Machine électrique selon l'une des revendications précédentes, **caractérisée en ce que** le rotor est muni de quatorze pôles (12) et **en ce que** le stator est muni de vingt encoches définissant vingt dents autour desquelles sont bobinées pour les cinq phases vingt bobines (20, 22, 24, 26) concentriques en double couche.

9. Machine électrique selon l'une des revendications précédentes, **caractérisée en ce que** les pôles sont formés par des aimants (12) et le rotor comprend des évidements (10) du rotor adaptés à recevoir lesdits aimants (12) formant les pôles.

10. Machine électrique selon la revendication 9, **caractérisée en ce que** les aimants (12) forment des pôles du rotor (4) sont disposés radialement et parallèlement à l'axe de rotation du rotor (4), en étant arrangés de façon à obtenir une structure de rotor de type à concentration de flux.

11. Machine selon la revendication 9 ou 10, **caractérisée en ce que** les aimants (12) forment des pôles sont segmentés radialement en trois parties.

**Patentansprüche**

1. Rotierende elektrische Mehrphasen-Synchronmaschine, die einen mit Polen (12) versehenen Rotor (4) aufweist, der innerhalb eines Stators dreht, der Zähne definierende Nuten (8) aufweist, um die Spulen des Stators (20, 22, 24, 26) gewickelt sind, wobei das durch Teilen der Anzahl von Nuten (8) durch die Anzahl von Phasen der Maschine und die Anzahl von Polen des Rotors erhaltene Verhältnis (SPP) gleich 2/7 ist, **dadurch gekennzeichnet, dass** die Spulen jeder Phase nicht winkelmäßig gleichmäßig auf dem Umfang des Stators verteilt sind, dass die Spulen (20, 22, 24, 26) jeder Phase Gruppen von zwei Spulen, Spulenpaare genannt, bilden, dass die zwei Spulen eines Paars (20,22 oder 24,26) durch zwei Zähne des Stators getrennt sind, die Paare (20+22, 24+26) einer Phase auf dem Umfang des Stators um 6 Zähne zueinander beabstandet sind.

2. Elektrische Maschine nach Anspruch 1, **dadurch gekennzeichnet, dass** die Anzahl von Phasen größer als oder gleich 3 ist, zum Beispiel 5 oder 7 Phasen.

3. Elektrische Maschine nach einem der vorhergehenden Ansprüche, **dadurch gekennzeichnet, dass** die Maschine fünf Phasen enthält, und die Spulen um jeden Zahn des Stators konzentrisch in Doppelschicht gewickelt sind.

4. Elektrische Maschine nach einem der vorhergehenden Ansprüche, **dadurch gekennzeichnet, dass** jede der zwei Spulen jedes Paars gewickelt wird, indem sie in der gleichen Richtung um einen Zahn des Stators dreht, und dass für jede Phase entlang des Umfangs des Stators die Wickelrichtung der Spulen eines Paars entgegengesetzt zur Wickelrichtung der Spulen des vorhergehenden Paars ist.

5. Elektrische Maschine nach einem der vorhergehenden Ansprüche, **dadurch gekennzeichnet, dass** für jedes Paar die zwei Spulen zueinander in Reihe montiert sind.

**6.** Elektrische Maschine nach einem der vorhergehenden Ansprüche, **dadurch gekennzeichnet, dass** das erste Paar von Spulen (20, 22) antiparallel zum zweiten Paar (24, 26) montiert ist.

**7.** Elektrische Maschine nach einem der Ansprüche 1 bis 5, **dadurch gekennzeichnet, dass** die zwei Spulen des ersten Paars (20, 22 oder 24, 26) in Reihe montiert sind, das in Reihe Kopf bei Fuß bezüglich des zweiten Paars (24,26 oder 20,22) montiert ist, das ebenfalls in Reihe montiert ist.

**8.** Elektrische Maschine nach einem der vorhergehenden Ansprüche, **dadurch gekennzeichnet, dass** der Rotor mit vierzehn Polen (12) versehen ist, und dass der Stator mit zwanzig Zähne definierenden zwanzig Nuten versehen ist, um die herum für die fünf Phasen zwanzig Spulen (20, 22, 24, 26) konzentrisch in Doppelschicht gewickelt sind.

**9.** Elektrische Maschine nach einem der vorhergehenden Ansprüche, **dadurch gekennzeichnet, dass** die Pole von Magneten (12) gebildet werden und der Rotor Aussparungen (10) des Rotors enthält, die geeignet sind, die die Pole bildenden Magnete (12) aufzunehmen.

**10.** Elektrische Maschine nach Anspruch 9, **dadurch gekennzeichnet, dass** die Pole des Rotors (4) bildenden Magnete (12) radial und parallel zur Drehachse des Rotors (4) angeordnet sind, indem sie so arrangiert sind, dass ein Rotoraufbau der Art mit Flusskonzentration erhalten wird.

**11.** Maschine nach Anspruch 9 oder 10, **dadurch gekennzeichnet, dass** die Pole bildenden Magnete (12) radial in drei Teile segmentiert sind.


**Claims**

**1.** Polyphase synchronous rotary electric machine, having a motor (4) provided with poles (12) rotating inside a stator having slots (8) defining teeth around which are wound coils of the stator (20, 22, 24, 26), the ratio (SPP) obtained by dividing the number of slots (8) by the number of phases of the machine and the number of poles of the rotor being equal to 2/7, **characterized in that** the coils of each phase are not angularly distributed in a regular manner on the periphery of the stator, **in that** the coils (20, 22, 24, 26) of each phase form groups of two coils called pairs of coils, **in that** the two coils of a pair (20, 22 or 24, 26) are separated by two teeth of the stator, pairs (20+22, 24+26) of a phase are spaced apart on the periphery of the stator with respect to one another by six teeth.

**2.** Electric machine according to Claim 1, **characterized in that** the number of phases is greater than or equal to 3, for example 5 or 7 phases.

**3.** Electric machine according to either of the preceding claims, **characterized in that** the machine comprises five phases, and the coils are wound around each tooth of the stator in a double-layer concentric configuration.

**4.** Electric machine according to any one of the preceding claims, **characterized in that** each of the two coils of each pair is wound by rotating in the same direction about a tooth of the stator and **in that**, for each phase, following the periphery of the stator, the winding direction of the coils of a pair is opposite to the winding direction of the coils of the preceding pair.

**5.** Electric machine according to any one of the preceding claims, **characterized in that** for each pair the two coils are connected in series with respect to one another.

**6.** Electric machine according to any one of the preceding claims, **characterized in that** the first pair of coils (20, 22) is connected in antiparallel with the second pair (24, 26).

**7.** Electric machine according to any one of Claims 1 to 5, **characterized in that** the two coils of the first pair (20, 22 or 24, 26) are connected in series that is connected back to back in series with respect to the second pair (24, 26 or 20, 22) that is also connected in series.

**8.** Electric machine according to one of the preceding claims, **characterized in that** the rotor is provided with fourteen poles (12) and **in that** the stator is provided with twenty slots defining twenty teeth around which are wound, for the five phases, twenty concentric coils (20, 22, 24, 26) in a double-layer configuration.

**9.** Electric machine according to one of the preceding claims, **characterized in that** the poles are formed by magnets (12) and the rotor comprises recesses (10) in the motor that are designed to receive said magnets (12) forming the poles.

**10.** Electric machine according to Claim 9, **characterized in that** the magnets (12) forming poles of the rotor (4) are disposed radially and parallel to the axis of rotation of the rotor (4), being arranged so as to obtain a rotor structure of the flux concentration type.

**11.** Machine according to Claim 9 or 10, **characterized in that** the magnets (12) forming poles are segmented radially into three parts.

## Fig.1

| \ pôles<br>encôches \ | 6 | 8 | 10 | 12 | 14 | 16 | 18 |
|---|---|---|---|---|---|---|---|
| 5 | h1 : 0,95<br>h3 : 0,59 | h1 : 0,59<br>h3 : 0,95 |  | h1 : 0,59<br>h3 : 0,95 | h1 : 0,95<br>h3 : 0,59 | h1 : 0,95<br>h3 : 0,59 | h1 : 0,59<br>h3 : 0,95 |
| 10 | h1 : 0,81<br>h3 : 0,31 | h1 : 0,95<br>h3 : 0,59 |  | h1 : 0,95<br>h3 : 0,59 | h1 : 0,81<br>h3 : 0,31 | h1 : 0,59<br>h3 : 0,95 |  |
| 15 | h1 : 0,59<br>h3 : 0,95 |  |  | h1 : 0,95<br>h3 : 0,59 | h1 : 0,98<br>h3 : 0,83 | h1 : 0,98<br>h3 : 0,83 | h1 : 0,95<br>h3 : 0,59 |
| 20 |  | h1 : 0,59<br>h3 : 0,95 |  | h1 : 0,81<br>h3 : 0,31 | h1 : 0,88<br>h3 : 0,14 | h1 : 0,95<br>h3 : 0,59 | h1 : 0,98<br>h3 : 0,79 |
| 25 |  |  | h1 : 0,59<br>h3 : 0,95 |  |  |  | h1 : 0,85<br>h3 : 0,13 |

$C_3$    $C_1$    $C_2$

## Fig.2

| \ pôles<br>encôches \ | 6 | 8 | 10 | 12 | 14 | 16 | 18 |
|---|---|---|---|---|---|---|---|
| 5 | 30 | 40 |  | 60 | 70 | 80 | 90 |
| 10 | 30 | 40 |  | 60 | 70 | 80 |  |
| 15 | 30 |  |  | 60 | 210 | 240 | 90 |
| 20 |  | 40 |  | 60 | 140 | 80 | 180 |
| 25 |  |  | 50 |  |  |  | 450 |

## Fig.3

| \ pôles<br>encôches \ | 6 | 8 | 10 | 12 | 14 | 16 | 18 |
|---|---|---|---|---|---|---|---|
| 5 | 247 | 245,2 |  | 201,4 | 173,2 | 209,6 | 134,8 |
| 10 | 15 | 38,5 |  | 61,3 | 66,3 | 61,1 |  |
| 15 | 2,8 |  |  | 17,2 | 21,6 | 23,4 | 27,2 |
| 20 |  | 1,6 |  | 3,8 | 6,6 | 9,1 | 11,9 |
| 25 |  |  | 1 |  |  |  | 4,9 |

$C_4$

## Fig.4

$C_5$

| Encoches | SPP | (A) | (B) | ( C) | 2*(A) - (B) | 2*(A) - (B) -0,5*(C) |
|---|---|---|---|---|---|---|
| 20 & 8 | 1/2 | 5,88 | 1,56 | 25,00 | 10,20 | -2,30 |
| 20 & 12 | 1/3 | 8,09 | 3,76 | 16,67 | 12,42 | 4,09 |
| 20 & 14 | 2/7 | 8,80 | 6,59 | 7,14 | 11,01 | 7,44 |
| 20 & 16 | 1/4 | 9,51 | 9,11 | 12,50 | 9,91 | 3,66 |
| 20 & 18 | 2/9 | 9,76 | 11,89 | 5,56 | 7,62 | 4,84 |

$C_6$

## Fig.5

$C_5$

| Encoches | SPP | (A) | (B) | (C) | 2*(A) - (B) | 2*(A) - (B) -0,5*(C) |
|---|---|---|---|---|---|---|
| 20 & 8 | 1/2 | 0,60 | 0,13 | 1,00 | 1,07 | 0,57 |
| 20 & 12 | 1/3 | 0,83 | 0,32 | 0,67 | 1,34 | 1,01 |
| 20 & 14 | 2/7 | 0,90 | 0,55 | 0,29 | 1,25 | 1,10 |
| 20 & 16 | 1/4 | 0,97 | 0,77 | 0,50 | 1,18 | 0,93 |
| 20 & 18 | 2/9 | 1,00 | 1,00 | 0,22 | 1,00 | 0,89 |

$C_6$

Fig.6

## Fig.7

## Fig.8

# Fig.9

**EP 2 804 299 B1**

## RÉFÉRENCES CITÉES DANS LA DESCRIPTION

**Documents brevets cités dans la description**

- WO 2010146368 A2
- GB 2289991 A
- WO 2006029972 A
- FR 2887698